# FASCICULE DE BREVET EUROPEEN

(11) **EP 0 870 643 B1**
(45) Date de publication et mention de la délivrance du brevet: **07.11.2001**
(21) Numéro de dépôt: 98400814.4
(22) Date de dépôt: 06.04.1998
(51) Int. Cl.: B60Q 1/04

(54) **Dispositif d'éclairage ou de signalisation à glace affleurante et moyens de calage, pour véhicule automobile**
Beleuchtungs- oder Signaleinrichtung mit ausgeglichener Lichtscheibe und Festhaltemittel für Fahrzeuge
Lighting or signalling device with flush mounted lens and setting device for vehicule

(30) Priorité: 08.04.1997 FR 9704268
(43) Date de publication de la demande: 14.10.1998
(73) Titulaire: VALEO VISION, 93000 Bobigny (FR)
(72) Inventeur: Virette, Jacques, 77410 Claye Souilly (FR); Casses, Daniel, 93370 Montfermeil (FR)
(74) Mandataire: Le Forestier, Eric

(56) Documents cités:
- DE-A- 4 438 329
- FR-A- 894 131

## Description

La présente invention a trait d'une façon générale à la fixation d'un dispositif d'éclairage ou de signalisation de véhicule automobile dans une ouverture réservée dans la carrosserie à cet effet.

La fixation d'un dispositif d'éclairage ou de signalisation, tel qu'un projecteur ou un bloc de feux de signalisation, dans une ouverture de carrosserie fait conventionnellement appel à des moyens réglables, qui ont pour but notamment d'assurer que la glace du dispositif se trouve bien à l'affleurement de la carrosserie qui l'entoure. On réalise ainsi un assemblage satisfaisant sur les plans esthétique et aérodynamique.

Outre ces moyens de montage réglables, il est également connu de prévoir sur le dispositif d'éclairage ou de signalisation, et en particulier sur son boîtier, des moyens de calage qui contribuent au bon positionnement, et qui maintiennent un écart prédéterminé, généralement de quelques millimètres, entre le bord de la glace et le bord avoisinant de la carrosserie.

Ainsi il est connu de recourir à des pions venus de matière sur le boîtier ou sur la glace, et qui sont engagés dans des lumières formées dans la carrosserie.

Le document EP-A-0 719 671 décrit une telle solution.

Lorsque, comme le décrit ce document, l'espace vide existant entre la glace et la carrosserie est rempli d'une garniture, cette solution est convenable sur le plan esthétique, car la garniture masque les pions, et la transition entre la glace et la carrosserie présente un aspect régulier.

En revanche, si l'on souhaite s'affranchir de la présence de cette garniture, pour des raisons d'économie ou autres, alors la solution de cette antériorité devient désavantageuse d'une part, en ce que les pions ne sont pas capables à eux seuls d'établir un vide de largeur prédéterminée entre la glace et la carrosserie, et d'autre part en ce que les pions sont nettement visibles pour un observateur se trouvant en face de l'espace vide.

Enfin le montage de ce type de projecteur connu est fastidieux, d'une part parce qu'il requiert une certaine habileté pour introduire les pions dans les lumières prévues à cet effet dans la carrosserie, et d'autre part parce qu'il est nécessaire d'engager le projecteur dans son ouverture dans une direction oblique, ce qui impose des mouvements de montage complexes.

La présente invention vise à pallier cet inconvénient et à proposer des moyens de calage en position qui permettent d'assurer un positionnement extrêmement précis du dispositif d'éclairage ou de signalisation par rapport à la carrosserie, qui permettent également de créer entre la glace du dispositif et la carrosserie un espace vide de largeur bien déterminée, et dans lesquels sensiblement aucune discontinuité d'aspect ne soit perceptible au niveau de cet espace vide.

Ainsi la présente invention propose un dispositif d'éclairage ou de signalisation pour véhicule automobile, du type comprenant un boîtier fermé par une glace et abritant des moyens optiques, le dispositif étant apte à être reçu dans une ouverture formée dans la carrosserie du véhicule dans une position prédéterminée telle que la glace prolonge avec affleurement la partie de carrosserie avoisinante, et le dispositif comportant des aménagements de calage formés au voisinage d'un bord de la glace et aptes à coopérer avec des aménagements associés prévus sur la carrosserie pour donner au dispositif ladite position prédéterminée, caractérisé en ce que les moyens de calage comprennent au moins un premier élément en saillie vers l'arrière à partir d'une partie latéralement rentrante de la glace et apte à s'appuyer, essentiellement dans la direction de l'axe du véhicule, contre un rebord latéralement rentrant de la carrosserie délimitant ladite ouverture, et au moins un second élément en saillie latéralement à partir d'une partie du boîtier et apte à s'appuyer latéralement contré ledit rebord, ledit second élément possédant une face antérieure se trouvant, dans ladite position prédéterminée du dispositif, essentiellement dans le prolongement dudit rebord de la carrosserie.

Des aspects préférés, mais non limitatifs, du dispositif selon l'invention sont les suivants :
- le dispositif comprend deux premiers éléments en saillie espacés verticalement sur la glace.
- chaque premier élément occupe une hauteur réduite et se situe en retrait vers l'intérieur par rapport à un coin formé par la glace et par sa partie rentrante.
- ledit second élément est apte à être reçu dans une encoche essentiellement complémentaire formée dans le rebord de la carrosserie, de manière à assurer un calage du dispositif en direction verticale.
- le dispositif comprend au moins un troisième élément en saillie latéralement à partir du boîtier du dispositif et apte à se placer en arrière dudit rebord de la carrosserie, un bord postérieur du premier élément et une partie de bord du troisième élément définissant, en projection orthogonale dans un plan vertical, une encoche de réception de l'extrémité libre du rebord de la carrosserie pour un calage dans la direction axiale du véhicule.
- ladite partie de bord du troisième élément est une partie de bord oblique.
- il est prévu deux troisièmes éléments espacés verticalement.
- les premiers éléments et les troisièmes éléments sont situés à des hauteurs différentes.
- il est prévu un moyen élastique apte à opérer entre le boîtier du dispositif et la carrosserie pour solliciter le dispositif essentiellement latéralement vers le rebord de la carrosserie.
- la partie rentrante de la glace est apte à s'étendre essentiellement parallèlement et à distance dudit rebord de la carrosserie et de la face frontale du second élément.

D'autres aspects, buts et avantages de la présente invention apparaîtront mieux à la lecture de la description détaillée suivante d'une forme de réalisation préférée de celle-ci, donnée à titre d'exemple et faite en référence au dessin annexé, sur lequel :
la figure 1 est une partielle de face d'une partie latérale d'un projecteur de véhicule automobile et de l'environnement du véhicule,
la figure 2 est une vue en coupe horizontale selon la ligne II-II de la figure 1, et
la figure 3 est une vue en coupe horizontale selon la ligne III-III de la figure 1.

On notera préliminairement que la description qui suit concerne un ensemble projecteur/feu de signalisation monté à l'avant d'un véhicule, et que les indications de type "avant" et "arrière" sont données par rapport à la direction de marche du véhicule. Ces indications sont à inverser dans le cas d'un bloc de feux de signalisation arrière.

En référence au dessin, on a représenté une région avant droite (par rapport au sens de la marche) d'un véhicule automobile, C désignant la carrosserie, PC le pare-chocs, B un bandeau avant situé au-dessus du pare-chocs, et CA le capot avant.

Dans la carrosserie C est ménagée une ouverture 0 pour un projecteur, globalement désigné par la référence P.

Ce projecteur comporte un boîtier 10 fermé par une glace 20. La référence 30 désigne un enjoliveur intérieur.

La partie du projecteur plus particulièrement illustrée sur les figures est une partie latérale abritant une fonction de signalisation telle que feu de position ou clignotant indicateur de direction, la ou les fonctions projecteur se trouvant vers l'intérieur.

Le feu de signalisation est reçu dans une partie 11 du boîtier en prolongement vers l'arrière, délimitée d'un côté par une partie 12 à partir de laquelle une languette d'un seul tenant 13 fait saillie vers l'arrière, et de l'autre côté par une partie formant gorge 10.

La référence C' désigne une partie de façage de la carrosserie, en saillie vers l'avant et munie d'une ouverture dans laquelle la languette 13 s'engage lors du montage du projecteur.

La partie de boîtier 11 pénètre au cours de ce montage dans le creux défini entre ladite partie de façade C' et entre la partie d'aile de la carrosserie, qui possède un rebord rentrant C1 s'étendant perpendiculairement à l'axe du véhicule.

La glace 20 comporte au niveau de son bord latéral galbé (forme dite en "retour d'aile") une partie oblique rentrante 21 suivie d'une nervure 22 en saillie vers l'arrière et pénétrant dans la gorge 14 du boîtier.

Un joint ou un adhésif (non représenté) est prévu au fond de cette gorge, de façon classique en soi.

On va maintenant décrire en détail les moyens de calage du projecteur par rapport à la carrosserie, destinés à assurer qu'entre l'extrémité latérale de la glace et le bord voisin de l'aile à partir duquel s'étend le rebord rentrant C1 subsiste un espace vide de largeur contrôlée, par exemple de quelques millimètres, et à assurer que la face externe de la glace se trouve dans le prolongement de l'aile.

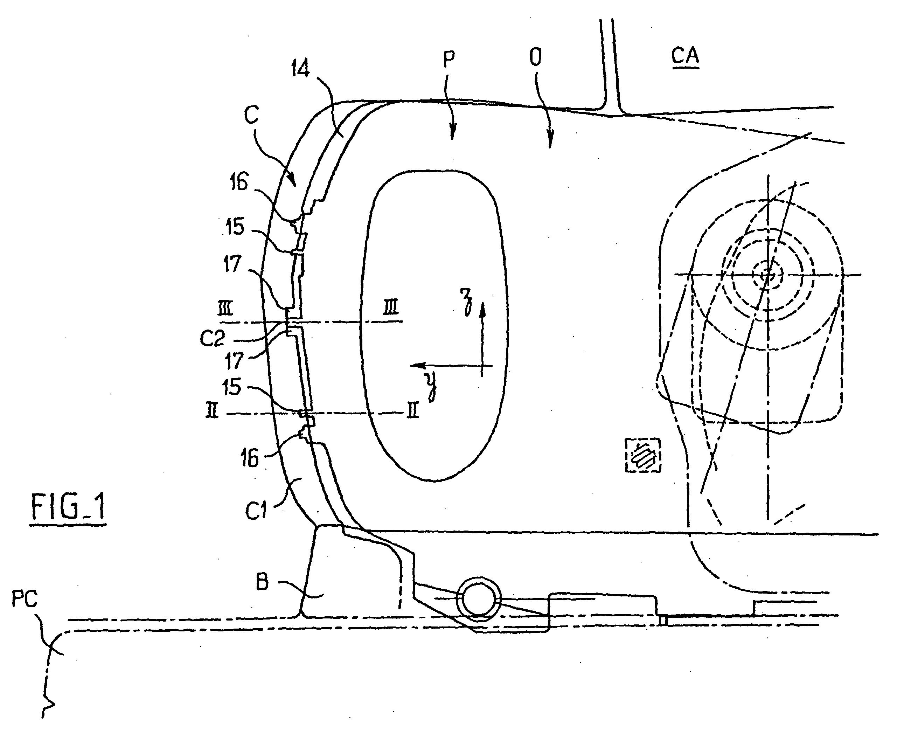

Ces moyens comprennent tout d'abord un élément formant ressort 19 réalisé sous la forme d'une lame-ressort fixée sur un aménagement 18 formé sur le bord latéral intérieur de la partie 11 du boîtier. cette lame ressort est fixée au boîtier par exemple par surmoulage, ou encore par engagement à force d'une embase, comportant un épi, dans une fente qui constitue ledit aménagement 18, comme illustré sur la figure 1.

Cette lame-ressort 19 est apte, lors du montage du projecteur dans son ouverture, à s'appuyer sur le côté adjacent de la partie de carrosserie C' pour ainsi solliciter le boîtier 10 sensiblement dans la direction de l'axe y illustré sur les figures, c'est-à-dire sensiblement latéralement.

Les moyens de calage comprennent par ailleurs une série d'éléments en saillie formés sur le boîtier et sur la glace, comme on va le voir plus loin, et destinés à coopérer avec le rebord rentrant C1 de la carrosserie.

Ces éléments en saillie comprennent tout d'abord deux languettes minces 15 s'étendant dans des plans essentiellement horizontaux et latéralement vers l'extérieur à partir de la région d'extrémité libre de la partie 14 du boîtier 10. Ces languettes sont de préférence venues de moulage lors de la fabrication du boîtier.

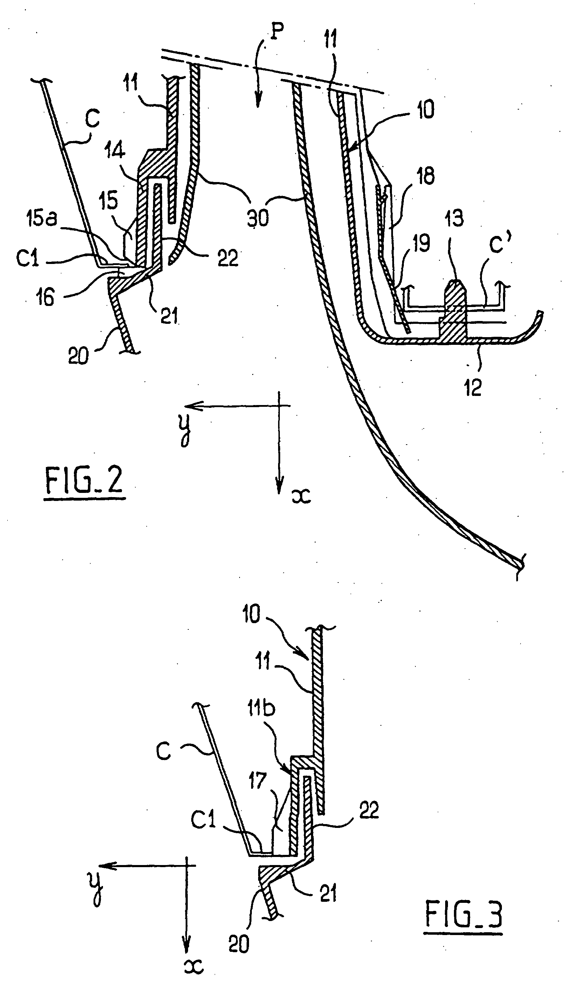

Comme le montre la figure 2, ces languettes 15 présentent un contour en forme de trapèze, avec en particulier un bord en biseau 15a sensiblement à 45° au niveau de l'extrémité avant.

Comme le montre la figure 1, ces deux languettes 15 s'étendent à deux hauteurs intermédiaires espacées l'une de l'autre.

On trouve en outre deux bossages 16 formés également en saillie à partir de la partie rentrante 21 de la glace et faisant saillie vers l'arrière en se terminant par un bord droit essentiellement parallèle au rebord rentrant C1 de la carrosserie C. Ces deux bossages 16 présentent un profil transversal généralement triangulaire. On observe également qu'ils s'arrêtent à distance du coin extérieur présent à la transition entre la glace 20 et sa partie rentrante 21.

Les deux bossages 16 sont situés respectivement légèrement au-dessus de la languette 15 supérieure et légèrement au-dessous de la languette 15 inférieure, et sont réalisés de préférence d'un seul tenant avec la glace.

Enfin il est prévu, sensiblement à mi-hauteur de la partie 14 du boîtier, deux pattes 17 en vis-à-vis, formées de préférence d'un seul tenant avec le boîtier et constituées par la matière de cette partie du boîtier coudée à angle droit vers l'extérieur, avec des faces d'extrémités libres latérales coplanaires et essentiellement verticales, et des faces frontales essentiellement coplanaires et verticales, s'étendant au niveau de l'extrémité libre frontale de la partie 14 du boîtier.

On observe par ailleurs sur la figure 1 que le rebord rentrant C1 de la carrosserie C comporte essentiellement à mi-hauteur une encoche C2 de forme essentiellement complémentaire de la saillie définie conjointement par les deux pattes 17.

On observera également que ressort 19 est de préférence situé sensiblement à la hauteur des deux pattes 17.

On va maintenant décrire le montage et le calage du projecteur P dans son ouverture O de la carrosserie.

On notera préliminairement que la glace 20 est montée sur le boîtier 10 de telle sorte que les bossages 16 de la glace viennent tous deux prendre appui contre la face d'extrémité frontale de la partie 14 du boîtier. On établit de la sorte une relation précise, notamment selon la direction x, entre les positions mutuelles du boîtier et de la glace, et donc de leurs aménagements respectifs de calage. On observe en outre que la figure 2 que ce montage définit, en projection orthogonale dans un plan horizontal, un espace libre d'angle au sommet aigu défini conjointement par le bord libre postérieur des bossages 16 et par le bord oblique 15a des languettes 15.

Le montage du projecteur est effectué manuellement par translation, essentiellement parallèlement à la direction x, à partir de l'avant du véhicule (de bas en haut sur les figures 2 et 3).

La fin de course suivant le direction x de ce montage est défini par deux butées, l'une consistant en l'appui de la languette 13 du boîtier contre la partie de carrosserie C', et l'autre consistant en l'appui du bord postérieur de chaque bossage 16 contre le rebord C1 de la carrosserie C. Comme le montre la figure 3, cette position est telle que les bords antérieurs des deux pattes 17 viennent se placer essentiellement dans l'alignement du rebord C1 de la carrosserie, tandis que les bords latéraux desdites pattes 17, sous l'effet de la sollicitation exercée par le ressort 19 qui a été mis en précontrainte lors du montage, viennent en appui contre le bord intérieur de l'encoche C2 ménagée dans le rebord C1, la complémentarité de formes assurant un calage de cette région du projecteur en direction verticale.

En outre, comme le montre la figure 2 les languettes 15 se trouvent en arrière du rebord C1 et occupent selon la direction v une position telle qu'en projection orthogonale dans un plan horizontal, leurs bords obliques 15a définissent, conjointement avec les bords postérieurs des bossages 16, des encoches en "V" dans lesquelles le rebord C1 de la carrosserie se trouve emprisonné.

Après le montage tel que décrit ci-dessus, le projecteur est fixé au véhicule par les moyens usuels (non représentés), tels que des écrous vissés sur des goujons solidaires du boîtier 10 du projecteur.

On réalise ainsi, par un mouvement de montage simple, un calage de la glace 20 par rapport à la carrosserie C à la fois selon les directions x et y et selon la direction verticale.

On observe que ce calage est réalisé à l'aide d'aménagements qui sont très peu visibles de l'extérieur. En particulier, les languettes 15 et les pattes 17 sont essentiellement masquées par le rebord C1 de la carrosserie, seuls pouvant être visibles les bossages 16, auxquels on peut donner si on le souhaite une épaisseur très petite, et qui de surcroît se situent en retrait par rapport à la face extérieure de la glace 20 et de la carrosserie C.

## Revendications

1. Dispositif d'éclairage ou de signalisation (P) pour véhicule automobile, du type comprenant un boîtier (10) fermé par une glace (20) et abritant des moyens optiques, le dispositif étant apte à être reçu dans une ouverture (O) formée dans la carrosserie du véhicule dans une position prédéterminée telle que la glace prolonge avec affleurement la partie de carrosserie avoisinante (C), et le dispositif comportant des aménagements de calage (15, 16, 17) formés au voisinage d'un bord de la glace et aptes à coopérer avec des aménagements associés prévus sur la carrosserie pour donner au dispositif ladite position prédéterminée, **caractérisé en ce que** les moyens de calage comprennent au moins un premier élément (16) en saillie vers l'arrière à partir d'une partie latéralement rentrante (21) de la glace et apte à s'appuyer, essentiellement dans la direction de l'axe du véhicule, contre un rebord latéralement rentrant (C1) de la carrosserie (C) délimitant ladite ouverture (O), et au moins un second. élément (17) en saillie latéralement à partir d'une partie du boîtier et apte à s'appuyer latéralement contre ledit rebord, ledit second élément possédant une face antérieure se trouvant, dans ladite position prédéterminée du dispositif, essentiellement dans le prolongement dudit rebord de la carrosserie.

2. Dispositif selon la revendication 1, **caractérisé en ce qu'**il comprend deux premiers éléments (16) en saillie espacés verticalement sur la glace (20).

3. Dispositif selon la revendication 2, **caractérisé en ce que** chaque premier élément (16) occupe une hauteur réduite et se situe en retrait vers l'intérieur par rapport à un coin formé par la glace (20) et par sa partie rentrante (21).

4. Dispositif selon l'une des revendications 1 à 3, **caractérisé en ce que** ledit second élément (17) est apte à être reçu dans une encoche essentiellement complémentaire (C2) formée dans le rebord (C1) de la carrosserie, de manière à assurer un calage du dispositif en direction verticale.

5. Dispositif selon l'une des revendications 1 à 4, **caractérisé en ce qu'**il comprend au moins un troisième élément (15) en saillie latéralement à partir du boîtier du dispositif et apte à se placer en arrière dudit rebord (C1) de la carrosserie, un bord postérieur du premier élément (16) et une partie de bord (15a) du troisième élément définissant, en projection orthogonale dans un plan vertical, une encoche de réception de l'extrémité libre du rebord (C1) de la carrosserie pour un calage dans la direction axiale du véhicule.

6. Dispositif selon la revendication 5, **caractérisé en ce que** ladite partie de bord (15a) du troisième élément est une partie de bord oblique.

7. Dispositif selon l'une des revendications 5 et 6, **caractérisé en ce qu'**il est prévu deux troisièmes éléments (15) espacés verticalement.

8. Dispositif selon les revendications 2 et 7 prises en combinaison, **caractérisé en ce que** les premiers éléments (16) et les troisièmes éléments (15) sont situés à des hauteurs différentes.

9. Dispositif selon l'une des revendications 1 à 8, **caractérisé en ce qu'**il est prévu un moyen élastique (19) apte à opérer entre le boîtier (10) du dispositif et la carrosserie (C') pour solliciter le dispositif essentiellement latéralement vers le rebord (C1) de la carrosserie.

10. Dispositif selon l'une des revendications 1 à 9, **caractérisé en ce que** la partie rentrante (21) de la glace est apte à s'étendre essentiellement parallèlement et à distance dudit rebord (C1) de la carrosserie et de la face frontale du second élément (17).

## Patentansprüche

1. Beleuchtungs- oder Signalgebungsvorrichtung (P) für ein Kraftfahrzeug, des Typs, der ein mit einer Scheibe (20) geschlossenes Gehäuse (10) aufweist, das optische Mittel beherbergt, wobei die Vorrichtung in einer Öffnung (O) aufgenommen werden kann, die in der Fahrzeugkarosserie an einer vorbestimmten Position gebildet ist, derart, daß die Scheibe das angrenzende Karosserieteil (C) bündig verlängert, und wobei die Vorrichtung in der Nähe des Scheibenrandes ausgebildete Einstelleinrichtungen (15, 16, 17) aufweist, die mit den an der Karosserie vorgesehenen zugehörigen Einrichtungen zusammenwirken können, um die Vorrichtung in die genannte vorbestimmte Position zu bringen,
**dadurch gekennzeichnet, daß** die Einstelleinrichtungen wenigstens ein erstes Element (16), das von einem seitlich eingezogenen Teil (21) der Scheibe nach hinten wegsteht und sich im wesentlichen in der Richtung der Fahrzeugachse an einem seitlich eingezogenen Rand (C1) der Karosserie (C) anlegen kann, der die genannte Öffnung (O) begrenzt, und wenigstens ein zweites Element (17) umfassen, das von einem Bereich des Gehäuses seitlich wegsteht und das sich seitlich an den genannten Rand anlegen kann, wobei das genannte zweite Element eine Vorderseite aufweist, die sich in der genannten vorbestimmten Position der Vorrichtung im wesentlichen in der Verlängerung des genannten Karosserierandes befindet.

2. Vorrichtung nach Anspruch 1,
**dadurch gekennzeichnet, daß** sie zwei erste wegstehende Elemente (16) umfasst, die auf der Scheibe (20) in vertikaler Richtung voneinander beabstandet sind.

3. Vorrichtung nach Anspruch 2,
**dadurch gekennzeichnet, daß** jedes erste Element (16) eine reduzierte Höhe belegt und bezüglich einer durch die Scheibe (20) und deren eingezogenem Teil (21) gebildeten Ecke nach innen versetzt angeordnet ist.

4. Vorrichtung nach einem der Ansprüche 1 bis 3,
**dadurch gekennzeichnet, daß** das zweite Element (17) in einer im wesentlichen komplementären Vertiefung (C2), die in dem Rand (C1) der Karosserie gebildet ist, auf eine Weise aufgenommen werden kann, die eine Einstellung der Vorrichtung in senkrechter Richtung gewährleistet.

5. Vorrichtung nach einem der Ansprüche 1 bis 4,
**dadurch gekennzeichnet, daß** sie mindestens ein drittes Element (15) aufweist, das von dem Gehäuse der Vorrichtung seitlich wegsteht und sich hinter dem genannten Rand (C1) der Karosserie platzieren kann, wobei ein hinterer Rand des ersten Elements (16) und ein Teil des Randes (15a) des dritten Elements bei orthogonaler Projektion auf eine senkrechte Projektionsebene eine Aufnahmevertiefung des freien Endes des Randes (C1) der Karosserie für eine Einstellung in Axialrichtung des Fahrzeuges bilden.

6. Vorrichtung nach Anspruch 5,
**dadurch gekennzeichnet, daß** der genannte Teil des Randes (15a) des dritten Elements ein Abschnitt eines schrägen Randes ist.

7. Vorrichtung nach Anspruch 5 oder 6,
**dadurch gekennzeichnet, daß** zwei dritte Elemente (15) vorhanden sind, die in vertikaler Richtung voneinander beabstandet sind.

8. Vorrichtung nach den Ansprüchen 2 und 7 ,
**dadurch gekennzeichnet, daß** sich die ersten (16) und die dritten Elemente (15) auf verschiedenen Höhen befinden.

9. Vorrichtung nach einem der Ansprüche 1 bis 8,
**dadurch gekennzeichnet, daß** eine elastische Einrichtung (19) vorhanden ist, die zwischen dem Gehäuse (10) der Vorrichtung und der Karosserie (C') wirken kann, um die Vorrichtung im wesentlichen seitlich gegen den Rand (C1) der Karosserie zu drängen.

10. Vorrichtung nach einem der Ansprüche 1 bis 9,
**dadurch gekennzeichnet, daß** der eingezogene Teil (21) der Scheibe sich im wesentlichen parallel und mit Abstand zum genannten Rand (C1) der Karosserie und der Vorderseite des zweiten Elements (17) erstrecken kann.

## Claims

1. Lighting or signalling device (P) for a motor vehicle, of the type comprising a housing (10) closed by a glazing (20) and containing optical means, the device being able to be received in an opening (O) formed in the vehicle bodywork in a predetermined position such that the cover extends the part of the adjoining bodywork (C) in a flush manner, and the device having locating arrangements (15, 16, 17) formed in the vicinity of one rim of the cover and able to cooperate with associated arrangements provided on the bodywork in order to give the device the said predetermined position, **characterised in that** the locating means comprise at least one first element (16) projecting towards the rear from a laterally inwardly directed part (21) of the cover and able to bear, essentially in the direction of the axis of the vehicle, against a laterally inwardly directed rim (C1) of the bodywork (C) delimiting the said opening (O), and at least one second element (17) projecting laterally from a part of the housing and able to bear laterally against the said rim, the said second element having a front face situated, in the said predetermined position of the device, essentially in line with the said rim of the bodywork.

2. Device according to Claim 1, **characterised in that** it comprises two first projecting elements (15) spaced apart vertically on the cover (20).

3. Device according to Claim 2, **characterised in that** each first element (16) occupies a reduced height and is situated recessed towards the inside with respect to a corner formed by the cover (2) and its inwardly directed part (21).

4. Device according to one of Claims 1 to 3, **characterised in that** the said second element (17) is able to be received in an essentially complementary notch (C2) formed in the rim (C1) of the bodywork, so as to ensure a locating of the device in the vertical direction.

5. Device according to one of Claims 1 to 4, **characterised in that** it comprises at least one third element (15) projecting laterally from the housing of the device and able to be situated at the rear of the said rim (C1) of the bodywork, a rear edge of the first element (16) and a edge part (15a) of the third element defining, in orthogonal projection in a vertical plane, a notch for receiving the free end of the rim (C1) of the bodywork for locating in the axial direction of the vehicle.

6. Device according to Claim 5, **characterised in that** the said edge part (15a) of the third element is an oblique edge part.

7. Device according to one of Claims 5 and 6, **characterised in that** two vertically spaced apart third elements (15) are provided.

8. Device according to Claims 2 and 7 taken in combination, **characterised in that** the first elements (16) and the third elements (15) are situated at different heights.

9. Device according to one of Claims 1 to 8, **characterised in that** an elastic means (19) is provided, able to operate between the housing (10) of the device and the bodywork (C') in order to force the device essentially laterally towards the rim (C1) of the bodywork.

10. Device according to one of Claims 1 to 9, **characterised in that** the inwardly directed part (21) of the cover is able to extend essentially parallel to and at a distance from the said rim (C1) of the bodywork and the front face of the second element (17).
